# EUROPEAN PATENT APPLICATION

(11) **EP 2 670 146 A1**
(43) Date of publication of application: **04.12.2013**
(21) Application number: 12305620.2
(22) Date of filing: 01.06.2012
(51) Int. Cl.: H04N 13/00, H04N 5/225

(54) **Method and apparatus for encoding and decoding a multiview video stream**

(71) Applicant: Alcatel Lucent, 75007 Paris (FR)
(72) Inventor: Macq, Jean-François, 1083 Ganshoren (BE); Rondao Alface, Patrice, 1400 Nivelles (BE); Stevens, Christoph, 9190 Stekene (BE); Van Broeck, Sigurd, 2980 Zoersel (BE)
(74) Representative: D'Halleweyn, Nele Veerle Trees Gertrudis

(57) **Abstract**

A method for encoding a multiview video stream representing a plurality of viewpoints of a 3D scenery comprising objects, the method comprising for each of said viewpoints rendering and encoding a plurality of 2D video streams, respective ones of said plurality of 2D video streams including color information, depth information, and transparency information pertaining to objects in respective object layers serializing said plurality of 2D video streams into a combined 2D video stream; including said combined 2D video stream into said multiview video stream.

## Description

### Field of the Invention

The present invention relates to the field of 3-dimensional (3D) video image generation, and in particular to efficiently storing and transmitting 3-dimensional scenery information.

### Background

3D Video scene can nowadays easily be built by mixing 3D computer graphics, 2D/3D images and video into a single 3D environment. The surfaces of 3D objects (or the objects themselves, if they are 2-dimensional) may be characterized *inter alia* by their geometry, position in the 3D scene, color texture, and opacity.

The general problem is to find a workable representation of such data, e.g. prior to compression and/or transmission. Retaining the full 3D scenery model provides a perfect lossless manner to represent the scene. However processing limitations of end client software or hardware can often not support real-time 3D rendering. Moreover video coding techniques that can directly process full object-based 3D scene are seldom standardized and deployed.

### Summary

According to an aspect of the invention, there is provided a method for encoding a multiview video stream representing a plurality of viewpoints of a 3D scenery comprising objects, the method comprising for each of the viewpoints: rendering and encoding a plurality of 2D video streams, respective ones of the plurality of 2D video streams including color information, depth information, and transparency information pertaining to objects in respective object layers; serializing the plurality of 2D video streams into a combined 2D video stream; including the combined 2D video stream into the multiview video stream.

Objects, as used herein, are generally surfaces that make up the visual representations of the entities appearing in the scenery. An object layer, as used herein, is a subset of the objects making up a particular visualization of the scenery.

It is an advantage of embodiments of the present invention that an intermediate level of information between a complete 3D model and a (set of) opaque 2D rendering(s) is efficiently encoded, which allows a more flexible reuse of the information on the receiver/display side. In particular, the encoded information allows the receiver/displayer to recreate a partial 3D model of the 3D scenery, which in turns allows the production of interpolated viewpoints.

In an embodiment of the method according to the present invention, said encoding of said multiview video stream comprises generating a stream according to the H.264 MVC standard.

In a particular embodiment, said transparency information is encoded as an alpha parameter.

It is an advantage of these embodiments that the invention can easily be integrated with existing standard compliant video encoding systems.

According to an aspect of the invention, there is provided a method for decoding a multiview video stream representing a plurality of viewpoints of a 3D scenery comprising objects, the method comprising for a first one of the viewpoints: extracting a first combined 2D video stream from the multiview video stream; deserializing the first combined 2D video stream into a first plurality of 2D video streams; - extracting color information, depth information, and transparency information pertaining to groups of objects in respective object layers from respective ones of the first plurality of 2D video streams; using the respective color information, depth information, and transparency information pertaining to the groups of objects in the respective object layers to generate a first superimposed stream, the first superimposed stream being consistent with the first one of the viewpoints.

This embodiment and its specific forms provide the decoder-side functions corresponding to the encoder-side functions described before.

In an embodiment, the method according to the present invention, further comprises for a second one of said viewpoints: extracting a second combined 2D video stream from said multiview video stream; deserializing said second combined 2D video stream into a third 2D video stream and a fourth 2D video stream; extracting additional color information, depth information, and transparency information pertaining to objects in said first object layer from said third 2D video stream; extracting additional color information, depth information, and transparency information pertaining to objects in said second object layer from said fourth 2D video stream; using said respective color information, depth information, and transparency information, and said respective additional color information, depth information, and transparency information pertaining to said objects in said first object layer and said objects in said second object layer to generate a second superimposed stream, said second superimposed stream being consistent with a new viewpoint, said new viewpoint being capable of being interpolated from said first one of said viewpoints and said second one of said viewpoints.

It is an advantage of this embodiment that it provides receiver-side interpolation of viewpoints, in addition to the viewpoints that are expressly encoded in the received stream.

In an embodiment, the method according to the present invention further comprises adding a rendering of a modeled 3D object to said superimposed stream in accordance with color information, depth information, and transparency information pertaining to said modeled 3D object.

It is an advantage of this embodiment that knowledge of the partial 3D properties of the rendered 3D scenery can be used to seamlessly introduce artifacts (such as additional 2D or 3D imagery) into the rendered stream at the receiver side.

According to an aspect of the invention, there is provided a computer program comprising software means configured to perform, when executed, a method as described above.

According to an aspect of the invention, there is provided a system for encoding a multiview video stream representing a plurality of viewpoints of a 3D scenery comprising objects, the system comprising a renderer configured to generate renderings according to a first viewpoint and a second viewpoint; a layer generator, operatively connected to the renderer, the layer generator being configured to divide the objects appearing in the first viewpoint into a first plurality of layers, to divide the objects appearing in the second viewpoint into a second plurality of layers, and to produce 2D video streams for each layer of the first plurality of layers and the second plurality of layers, the 2D video streams including color information, depth information, and transparency information pertaining to the objects in the respective layers; an encoder, operatively connected to the layer generator, the encoder being configured to encode and serialize the 2D video streams according to each of the first viewpoint and the second viewpoint into respective combined 2D video streams; an encapsulator, operatively connected to the encoder, the encapsulator being configured to include the combined 2D video streams into the multiview video stream.

In an embodiment of the system according to the present invention, said multiview video stream comprises a stream according to the H.264 MVC standard.

In a particular embodiment, said transparency information is encoded as an alpha parameter.

According to an aspect of the invention, there is provided a system for decoding a multiview video stream representing a plurality of viewpoints of a 3D scenery comprising objects, the system comprising: an extractor configured to extract a first combined 2D video stream from the multiview video stream; a decoder, operatively connected to the extractor, the decoder being configured to deserialize the first combined 2D video stream into a first plurality of 2D video streams; to extract color information, depth information, and transparency information pertaining to groups of objects in respective object layers from each of the first plurality of video streams; a view synthesizer, operatively connected to the decoder, the visualizing agent being configured to use the respective color information, depth information, and transparency information pertaining to the objects in the respective object layers to generate a first superimposed stream, the first superimposed stream being consistent with the first one of the viewpoints.

In an embodiment of the system according to the present invention, the extractor is further configured to extract a second combined 2D video stream from the multiview video stream; the decoder is further configured to deserialize the second combined 2D video stream into a second plurality of 2D video streams; to extract additional color information, depth information, and transparency information pertaining to the groups of objects from the second plurality of 2D video streams; and the view synthesizer is further configured to use the respective color information, depth information, and transparency information, and the respective additional color information, depth information, and transparency information pertaining to the groups of objects to generate a second superimposed stream, the second superimposed stream being consistent with a new viewpoint, the new viewpoint being capable of being interpolated from the first one of the viewpoints and the second one of the viewpoints.

In an embodiment of the system according to the present invention, said view synthesizer is further configured to add a rendering of a modeled 3D object to said superimposed stream in accordance with color information, depth information, and transparency information pertaining to said modeled 3D object.

According to an aspect of the invention, there is provided a set-top box comprising the system for decoding as described above.

The effects and advantages of the computer program and the systems according to embodiments of the present invention correspond, *mutatis mutandis,* to the effects and advantages of the method according to corresponding embodiments of the present invention.

### Brief Description of the Figures

Some embodiments of apparatus and/or methods in accordance with embodiments of the present invention are now described, by way of example only, and with reference to the accompanying drawings, in which:
Figure 1 illustrates the application of concepts of the invention to an exemplary 3-dimensional scenery;
Figure 2 represents an encoder and a decoder according to respective embodiments of the present invention;
Figure 3 represents an encoder and a decoder according to respective other embodiments of the present invention;
Figure 4 provides a flow chart of an encoding method according to an embodiment of the present invention;
Figure 5 provides a flow chart of a decoding method according to an embodiment of the present invention;
Figure 6 illustrates an encoding system according to an embodiment of the present invention; and
Figure 7 illustrates a decoding system according to an embodiment of the present invention.

Throughout the figures, like numerals have been used to designate like elements.

### Description of Embodiments

When a 3-dimensional scenery needs to be visualized at a site that is different from the site at which the original 3-dimensional scenery model is available, two general options exist: according to a first option, one or more 2-dimensional image streams are generated locally according to specific camera viewpoints, and these streams are transmitted to the visualization site; according to a second option, the 3-dimensional scenery model information is transmitted to the visualization site, and rendering of the desired 2-dimensional images takes place at the receiver.

Embodiments of the present invention are based on the insight of the inventors that another solution is advantageous in certain circumstances. Accordingly, in embodiments of the present invention, an advantageous trade- off can unexpectedly be achieved between the amount of bandwidth required for transmitting scenery information (which tends to be higher for transmission of the entire 3-dimensional model than for transmission of individual rendered viewpoints) and the flexibility of choosing a viewpoint at the receiver. In addition, embodiments of the present invention allow the introduction of novel 3-dimensional objects into the scenery at the client side.

Standards such as H.264/Multiview Video Coding (MVC) can be used to encode a predefined set of rendered views, as correlated 2D video. Hereinafter, the term "multiview video stream" will refer to a set of jointly encoded 2-dimensional video streams representing various camera viewpoints of the same 3-dimensional scenery.

At the client side, the predefined view can be output by the decoder, and view interpolation techniques can be used to generate intermediate views, provided that the set of encoded views is sufficiently dense. An extension known as Multiview Video and Depth coding (MVD) includes depth information of the image and requires less dense views to generate intermediate views.

Embodiments of the present invention are based on the insight of the inventors that discarding the information about the opacity of objects (alpha channel) after the rendering stage, limits the flexibility of the system at the decoding and rendering stage:
- regions of the video where overlaid semi-transparent objects have been blended are very difficult to process for intermediate view generation, because the pixels in these regions correspond simultaneously to objects at different depths and should therefore incur different motion parallax when the viewpoint is varying;
- the lack of an explicit alpha channel prevents the insertion of new objects into the scene, after the decoding stage, in a way that would be consistent with the initial object opacities of the 3D scene;
- the depth channel in MVD only applies to the closet visible surfaces for each rendered viewpoint, blocking and thus losing any information related to occluded regions -- to recover such information, another viewpoint would have to be explicitly encoded in which the affected regions are directly visible.

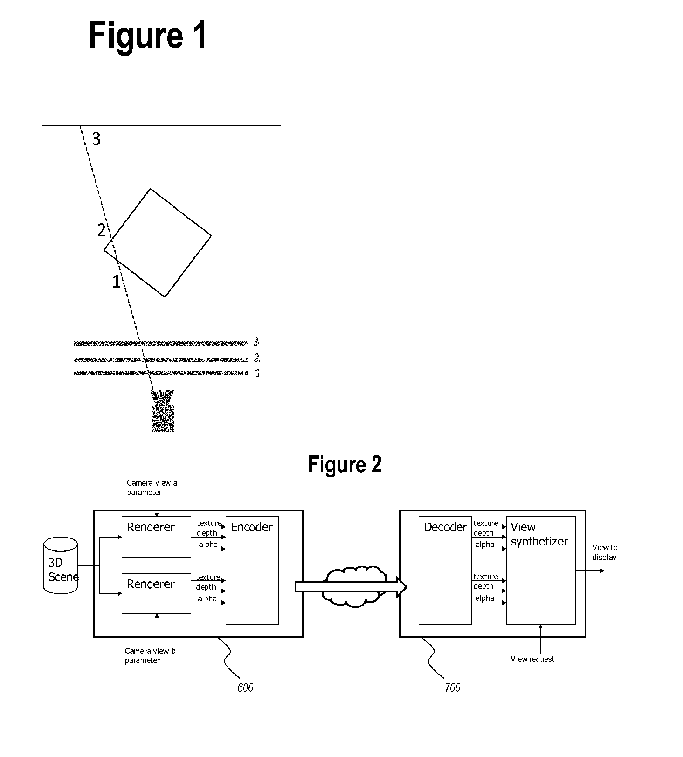

Accordingly, it is an object of embodiments of the present invention to use a Multiview representation of the scene, in which for each selected viewpoint, the 3D scene is rendered to multiple 2D "camera layers". These camera layers allow to project, to a single pixel location in the camera view, information from multiple surfaces of the 3D scene. For instance, this allows one to encode explicitly multiple surface textures, despite possible occlusions. In the case, depicted in Figure 1, the information consists of the color information for each surface **1, 2, 3,** but also of the alpha channel and the depth. Therefore we end up, for each viewpoint, with multiple triplets <color texture, depth, alpha>. Since all the data involved can be represented as a set of regular 2D video sequences, this representation can easily be cast into a valid input for off-the-shelf video coding standards (H.264, MVC, ...).

In addition, it can benefit from advanced forms of joint compression of the textures, alpha and depth channels as described in the European patent applications entitled **"Method and apparatus for encoding a video stream having a transparency information channel"** in the name of the Applicant and filed with application no. EP 12 305 617.8 and **"Method and apparatus for encoding a video stream"** in the name of the Applicant and filed with application no. EP 12 305 619.4, both on the same day as the present application, the content of which is incorporated by reference.

Figure 1 describes an embodiment, where for each pixel location in the 2D camera plane, we consider the ray originating from the camera sensor and passing by that pixel location. For each object surface intersected in the 3D scene, e.g. processed from the closest to the furthest, we compute the color, alpha and depth values and report them to the respective <color texture, depth, alpha> triplet. In the case of Figure 1, the maximum number of surfaces crossed by a camera ray is three, hence three camera layers are needed to represent all surfaces from that view point.

Several methods may be used to serialize the generated data, e.g.:
- planar: Either each color channel, depth and alpha are put in separate raster-scan vectors;
- packed: for each pixel in the raster-scan of the camera layer, we consecutively list its colors, depth and alpha values.

Other representation schemes as known to the person skilled in the art may also be used, including hybrid schemes in which planar or packed mode is selected in function of the actual number of pixels to be encoded in each camera layer.

Figure 2 depicts an end-to-end system where 2 virtual camera views are rendered from a given 3D scene. The arrow between the encoding system **600** and the decoding system **700** schematically represents the transmission and/or intermediate storage steps that separate the encoding stage from the decoding stage in space and/or time.

For each camera view, a renderer is needed to perform the steps described above and output color texture, depth and alpha information. These triplets can be jointly encoded, transmitted and decoded by treating as correlated video streams, as mentioned above.

After decoding the reconstructed triplets are used in a video synthesizer that needs to back project all texture color with the correct color, geometry (from depth) and opacity (from alpha).

When multiple views are used, it is not necessary to have all surfaces represented in each view. Any given surface may be best represented in a camera view where the tangent plane of the surface has a small angle with respect to the camera plane, so as to optimize compression performance. Conversely, redundancy between views can be exploited to improve the resolution of the textures of certain object surfaces, or the accuracy of their geometrical properties (from multi-view depth information) and of their opacity properties (from multi-view alpha channels).

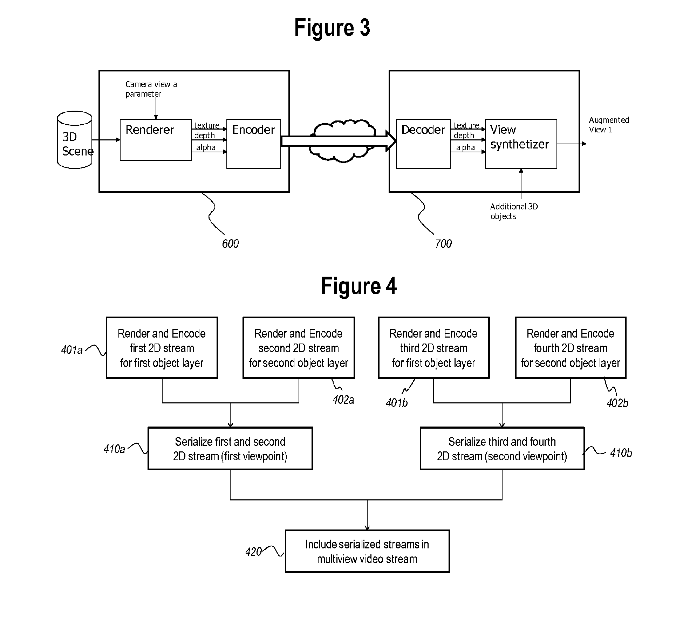

An exemplary synthesis step is performed in a client application, where the view rendering needs to be personalized by inserting additional 3D (or 2D) objects characterized by their texture, geometry and opacity as well. Figure 3 depicts an exemplary end-to-end system where a single view is rendered and transmitted. After decoding, 3D information can be inserted and processed at least in two ways:
- The scene is substantially reconstructed by backprojection, as described above, and then augmented with the insertion of the 3D objects. The final view is obtained by re-rendering operations.
- Since the camera view used at the client is the same as the camera view used for the representation, it is not necessary to rebuild a 3D model of the scene. Only the inserted 3D objects need to be locally rendered on the same camera view with their alpha and depth attributes, as proposed in the embodiment described in connection with Figure 1. The decoded camera view of the scene and the view containing the objects can then be easily blended by looking at the depth and alpha values pixel per pixel.

Without loss of generality, a generalized description of the invention will be presented with reference to two object layers **1, 2** and with reference to two viewpoints **a, b.** The skilled person will immediately understand that the same inventive concept applies equally to situations with more than two object layers and/or more than two viewpoints.

Systems according to the present invention are described hereinafter with reference to their functional elements. The skilled person will understand that these systems may further comprise input and output interfaces operating in accordance with well known protocols as defined in the applicable communications standard. The term "interface" designates the necessary hardware and software required to establish data communication connectivity across the various layers of the protocol stack, as is well known to a person skilled in the art. An access interface may for instance include an interface for an xDSL, xPON, WMAN, or 3G link. A LAN interface may for instance include an interface for one or more of an IEEE 802.3 "Ethernet" link, an IEEE 802.11 "Wireless LAN" link. A PAN interface may for instance include a USB interface or a Bluetooth interface.

Figure 4 provides a flow chart of an encoding method according to an embodiment of the present invention. Prior to the illustrated steps, several layers of objects appearing in the three-dimensional scenery are defined. These layers comprise surfaces of objects that are present in successive regions as one traverses the scenery away from the camera. In a first set of steps, the various layers are rendered and encoded for the various camera view points that are used. Accordingly, as illustrated in step **401a,** the first two-dimensional stream is produced corresponding to the first object layer seen from a first camera view point. In step **402a** the second object layer is produced from the same first camera view point. In step **410a** both two-dimensional streams representing the respective object layers from the same first camera view point are serialized and provided as a two-dimensional stream to be included in the multi-view video stream at step **420.**

Fully analogous steps may be performed simultaneously for a second camera view point. Accordingly in step **401b** a third two-dimensional stream is produced comprising the objects of the first object layer seen from a second camera view point. In step **402b,** a fourth two-dimensional stream is produced comprising the object of the second object layer seen from the second camera view point. These two two-dimensional streams are then serialized to produce a combined two-dimensional stream at step **410b,** which stream is combined with the stream resulting from step **410a** into the multi-view video stream at step **420.**

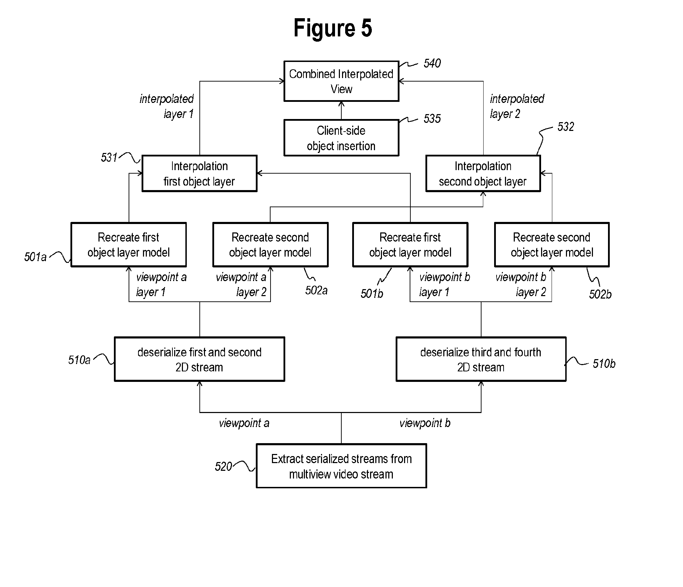

Figure 5 provides a flow chart of a decoding method according to the embodiment of the present invention. Figure 5 illustrates substantially the reverse process of Figure 4, wherein the steps are now ordered from bottom to top to emphasize the symmetry with the process of Figure 4. The multi-view video stream produced by means of a process such as the one illustrated in Figure 4 is assumed to be available to the decoding process of Figure 5 by means of a transmission channel, a storage medium or the like.

In a first step **520,** serialized streams are extracted from the available multi-view video stream, each of which represents multiple encoded layers seen from two respective camera view points. The first such serialized stream is deserialized at step **510a** and the components are subsequently used to recreate the first object layer at step 501a and the second object layer at step **502a.** In parallel and in a fully analogous way, the second serialized stream is deserialized at step **510b,** whence the first object layer is recreated at step **501b** and the second object layer is recreated at step **502b.** If a single encoded view point is to be rendered at the client site, the entire branch consisting of step **510b, 501b** and **502b** may be omitted and the object layers produced at **501a** and **502a** may be merged together in step **540** for visualization. However, if the client visualization agent wishes to display an interpolated view, the respective data concerning the first object layer resulting from steps **501a** and **501b** are combined in step **531** to produce an object model that allows interpolation towards the selected view point and the data available about the second object layer from step **502a** and **502b** are likewise interpolated at step **532.** Both interpolated object layers are then combined on the basis of the available color, depth and transparency information in step **540** for visualization. The visualization step **540** may further accept input from a client site object model **535** to add objects to the received three-dimensional scenery.

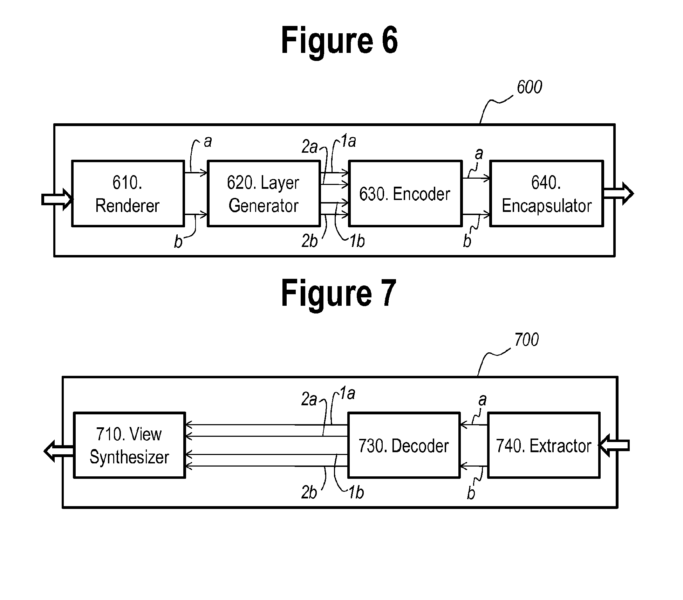

Figure 6 illustrates an encoding system according to an embodiment of the present invention. The encoding system **600** comprises a renderer **610** configured to generate renderings according to different view points, for example a first view point and a second view point. Layer generator **620,** operatively connected to the renderer **610,** is configured to divide the objects of the three-dimensional scenery model, as appearing in the different view points rendered by the renderer **610,** into different layers, for instance the first layer and the second layer designated as **1** and **2** in Figure 6. These layers are provided as separate 2D video streams including color information, depth information, and transparency information pertaining to the objects comprised in them. Video streams corresponding to the first layer for view point **a** and view point **b** are designated **1a** and **1b** respectively, renderings corresponding to the second layer for view point a and view point **b** are designated as **2a** and **2b** respectively. The division into layers of the different view points need not be identical; i.e., objects appearing in the same layer in the first view point may appear in different view points in the second view point. Furthermore, the number of layers into which the objects are divided in the various view points, need not be the same for each view point. To keep the description of the present example concise, two layers have been chosen for each view point, without loss of generality.

To keep the Figure clear, the functions of the renderer **610** and the layer generator **620** have been illustrated as two respective blocks, the joint output of which are the different layer-separated renderings **1a, 1b, 2a,** and **2b.** The same functions may be provided by a single functional block or different combinations of partial functions.

An encoder **630** is operatively coupled to the layer generator **620** and configured to encode the two-dimensional video renderings and to serialize them into combined two-dimensional video streams **a** and **b** for each of the respective view points. An encapsulator **640** operatively coupled to the encoder **630** merges the various serialized two-dimensional streams into a multi-view video stream for output to a storage or transmission system. The multi-view video stream is preferably formatted according to the H.264/MVC standard. The transparency information of the object in the various layers is encoded as an alpha parameter in the H.264 stream.

Figure 7 illustrates a corresponding decoding system according to an embodiment of the invention. This system comprises an extractor **740** configured to extract a first combined two-dimensional video stream and optionally a second combined two-dimensional video stream from said multi-view video stream, in which first and second combined video streams correspond to different respective camera view points **a** and **b.** A decoder **730** is operatively coupled to the extractor **740** and configured to deserialize the received combined two-dimensional video streams into a first and a second two-dimensional video stream for each of the received view points wherein the first and second deserialized video streams and second deserialized video streams correspond to different object layers in the three-dimensional scenery.

Accordingly, as illustrated four data streams will be available to view synthesizer **710** which is operatively coupled to the decoder **730,** namely two streams corresponding to view point **a (1a** and **2a,** for respective layers **1** and **2),** and two streams for view point **b (1b** and **2b,** for respective layers **1** and **2,** which do not necessarily represent an identical division of the objects as layers **1** and **2** of view point **a,** as explained above). The view synthesizer after optionally combining the received three-dimensional scenery with locally generated 3D objects or 2D imagery produces the final visual stream to be displayed at the receiver site.

Although methods and apparatus have been described hereinabove as separate embodiments, this is done for clarity purposes only, and it should be noted that features described only in connection with method embodiments may be applied in the apparatus according to the present invention to obtain the same technical effects and advantages, and vice versa.

The functions of the various elements shown in the figures, including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A method for encoding a multiview video stream representing a plurality of viewpoints of a 3D scenery comprising objects, the method comprising for each of said viewpoints:
- rendering and encoding a plurality of 2D video streams, respective ones of said plurality of 2D video streams including color information, depth information, and transparency information pertaining to objects in respective object layers;
- serializing said plurality of 2D video streams into a combined 2D video stream;
- including said combined 2D video stream into said multiview video stream.

2. The method according to claim 1, wherein said encoding of said multiview video stream comprises generating a stream according to the H.264 MVC standard.

3. The method according to claim 2, wherein said transparency information is encoded as an alpha parameter.

4. A method for decoding a multiview video stream representing a plurality of viewpoints of a 3D scenery comprising objects, the method comprising for a first one of said viewpoints:
- extracting a first combined 2D video stream from said multiview video stream;
- deserializing said first combined 2D video stream into a first plurality of 2D video streams;
- extracting color information, depth information, and transparency information pertaining to groups of objects in respective object layers from respective ones of said first plurality of 2D video streams;
- using said respective color information, depth information, and transparency information pertaining to said groups of objects in said respective object layers to generate a first superimposed stream, said first superimposed stream being consistent with said first one of said viewpoints.

5. The method according to claim 4, further comprising for a second one of said viewpoints:
- extracting a second combined 2D video stream from said multiview video stream;
- deserializing said second combined 2D video stream into a second plurality of 2D video streams;
- extracting additional color information, depth information, and transparency information pertaining to said groups of objects in respective object layers from respective ones of said second plurality of 2D video streams;
- using said respective color information, depth information, and transparency information, and said respective additional color information, depth information, and transparency information pertaining to said objects in said respective object layers to generate a second superimposed stream, said second superimposed stream being consistent with a new viewpoint, said new viewpoint being capable of being interpolated from said first one of said viewpoints and said second one of said viewpoints.

6. The method according to claim 4 or claim 5, further comprising adding a rendering of a modeled 3D object to said superimposed stream in accordance with color information, depth information, and transparency information pertaining to said modeled 3D object.

7. A computer program comprising software means configured to perform, when executed, the method of any of the preceding claims.

8. A system for encoding a multiview video stream representing a plurality of viewpoints of a 3D scenery comprising objects, the system comprising:
- a renderer configured to generate renderings according to a first viewpoint and a second viewpoint;
- a layer generator, operatively connected to said renderer, said layer generator being configured to divide said objects appearing in said first viewpoint into a first plurality of layers, to divide said objects appearing in said second viewpoint into a second plurality of layers, and to produce 2D video streams for each layer of said first plurality of layers and said second plurality of layers, said 2D video streams including color information, depth information, and transparency information pertaining to said objects in said respective layers;
- an encoder, operatively connected to said layer generator, said encoder being configured to encode and serialize said 2D video streams according to each of said first viewpoint and said second viewpoint into respective combined 2D video streams;
- an encapsulator, operatively connected to said encoder, said encapsulator being configured to include said combined 2D video streams into said multiview video stream.

9. The system according to claim 8, wherein said multiview video stream comprises a stream according to the H.264 MVC standard.

10. The system according to claim 9, wherein said transparency information is encoded as an alpha parameter.

11. A system for decoding a multiview video stream representing a plurality of viewpoints of a 3D scenery comprising objects, the system comprising:
- an extractor configured to extract a first combined 2D video stream from said multiview video stream;
- a decoder, operatively connected to said extractor, said decoder being configured to deserialize said first combined 2D video stream into a first plurality of 2D video streams; to extract color information, depth information, and transparency information pertaining to groups of objects in respective object layers from each of said first plurality of video streams;
- a view synthesizer, operatively connected to said decoder, said visualizing agent being configured to use said respective color information, depth information, and transparency information pertaining to said objects in said respective object layers to generate a first superimposed stream, said first superimposed stream being consistent with said first one of said viewpoints.

12. The system according to claim 11,
wherein said extractor is further configured to extract a second combined 2D video stream from said multiview video stream;
wherein said decoder is further configured to deserialize said second combined 2D video stream into a second plurality of 2D video streams; to extract additional color information, depth information, and transparency information pertaining to said groups of objects from said second plurality of 2D video streams; and
wherein said view synthesizer is further configured to use said respective color information, depth information, and transparency information, and said respective additional color information, depth information, and transparency information pertaining to said groups of objects to generate a second superimposed stream, said second superimposed stream being consistent with a new viewpoint, said new viewpoint being capable of being interpolated from said first one of said viewpoints and said second one of said viewpoints.

13. The system according to claim 11 or 12, wherein said view synthesizer is further configured to add a rendering of a modeled 3D object to said superimposed stream in accordance with color information, depth information, and transparency information pertaining to said modeled 3D object.

14. A set-top box comprising the system according to any of claims 8-13.
